# EUROPÄISCHE PATENTSCHRIFT

(11) **EP 0 987 447 B1**
(45) Veröffentlichungstag und Bekanntmachung des Hinweises auf die Patenterteilung: **11.02.2004**
(21) Anmeldenummer: 99117395.6
(22) Anmeldetag: 04.09.1999
(51) Int. Cl.: F16B 5/00, F16B 37/14

(54) **Verfahren zur Befestigung einer Baugruppe mit mindestens einer an dieser Baugruppe vormontierten Befestigungsschraube an einem Träger mit einer zugeordneten Öffnung sowie entsprechende Sicherungskappe**
Process for fastening an assembly comprising at least one premounted fastening screw to a support having an associated opening and corresponding protective cap
Procédé de fixation d'un ensemble comprenant au moins une vis de fixation prémontée à fixer sur un support comprenant une ouverture associée ainsi que capuchon protecteur

(30) Priorität: 17.09.1998 DE 19842591
(43) Veröffentlichungstag der Anmeldung: 22.03.2000
(73) Patentinhaber: Conti Temic microelectronic GmbH, 90411 Nürnberg (DE)
(72) Erfinder: Baur, Richard, 85276 Pfaffenhofen (DE); Wörle, Engelbert, 86556 Kühbach (DE)

(56) Entgegenhaltungen:
- EP-A- 0 756 044
- DE-A- 4 221 250
- US-A- 4 266 386

## Beschreibung

Die Erfindung betrifft ein Verfahren zur Befestigung einer Baugruppe mit den Merkmalen des Oberbegriffs von Anspruch 1 sowie entsprechende Sicherungskappe.

Aus der DE 297 14 824 U1 ist eine Befestigungsanordnung zu entnehmen, bei der an einem Bauteil mindestens eine Befestigungsschraube vormontiert ist und diese im vormontierten zustand mit dem Kopf in eine Aufnahmebohrung geführt wird, die eine längliche Öffnung mit einerm ersten Abschnitt aufweist, der derart bemessen ist, daß der Kopf hindurchführbar ist, und einen kleineren Abschnitt aufweist, der den Schaft aufnimmt, wenn der Kopf den Rand der Öffnung hintergreift. Die Befestigungsschrauben weisen dabei sowohl am Kopf als auch am Schaftende Werkzeugangriffsflächen auf, mit denen die Befestigungsschraube einerseits vormontiert, andererseits dann festgezogen wird.

Nachteil dieser Befestigungsanordnung ist, daß die vormontierte Befestigungsschraube jederzeit angezogen werden kann, insbesondere auch dann, wenn sie noch nicht oder nur teilweise in den kleineren Abschnitt eingeführt wurde. Der Kopf der Befestigungsschraube weist dann keine ausreichende Auflagefläche zum Träger auf. Dies kann bei einer verdeckten Montage am Band oft nicht erkannt werden.

Aufgabe der Erfindung ist, ein Verfahren anzugeben, durch welches eine ordnungsgemäße Befestigung sichergestellt werden kann. Diese Aufgabe wird durch die kennzeichnenden Merkmale des Patentanspruchs 1 gelöst. Außerdem wird eine entsprechende Sicherungskappe zur Durchführung des Verfahrens gelehrt. Vorteilhafte Weiterbildungen sind den Unteransprüchen zu entnehmen.

Grundgedanke dabei ist, daß der Kopf der Befestigungsschraube zumindest an den Angriffsflächen für das Werkzeug mittels einer Sicherungskappe zunächst abgedeckt, die Befestigungsschraube mitsamt der Sicherungskappe in den ersten Abschnitt des Trägers eingeführt wird und die Sicherungskappe die Angriffsflächen des Kopfes erst dann freigibt, wenn der Schaft in den kleineren Abschnitt eingeführt wird. Der kleinere Abschnitt wirkt dabei als Anschlag für die Sicherungskappe, die beim Einführen von der Befestigungsschraube abgestreift wird.

Die Erfindung wird nachfolgend anhand eines Ausführungsbeispiels und der Figuren näher erläutert. Kurze Beschreibung der Figuren:
- Figur 1: Baugruppe mit vormontierten Befestigungsschrauben, von denen eine mit einer Sicherungskappe abgedeckt ist
- Figur 2: Draufsicht auf die Baugruppe gemäß Fig. 1 und auf die Öffnungen des Trägers
- Figur 3: Befestigungsschraube
- Figur 4: Sicherungskappe gibt die Angriffsflächen des Kopfes beim Einführen des Schaftes in den kleineren Abschnitt frei
- Figur 5: Seitenansichten der Sicherungskappe und Schnitt seitlich
- Figur 6: Draufsicht auf die Sicherungskappe und Schnitt
- Figur 7: Veranschaulichung der Abdeckung des Kopfes bis zum vollständigen Einführen

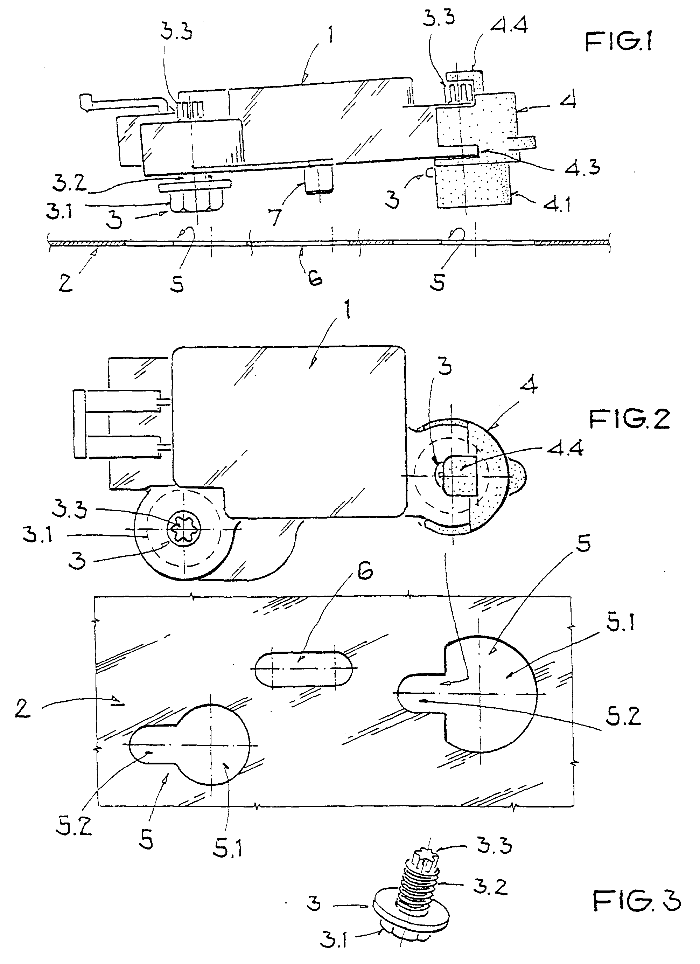

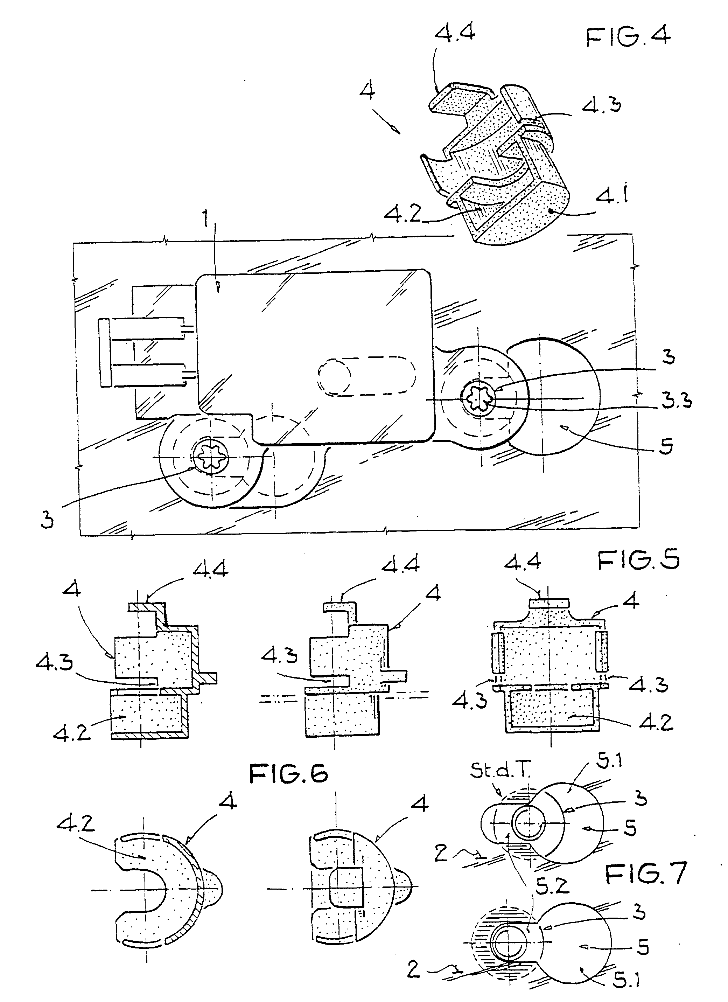

Figur 1 zeigt eine Seitenansicht der Baugruppe 1, bspw. eine Kfz-Elektronikbaugruppe, die an einem Träger 2, bspw. einem Karosserieblech, befestigt werden soll. An der Baugruppe 1 sind in diesem Ausführungsbeispiel 2 Befestigungschrauben 3 vormontiert. Figur 3 zeigt eine Detailansicht einer Befestigungsschraube 3 bestehend aus einem Kopf 3.1 mit ersten Werkzeugangriffsflächen in Form eines Außensechskant, einem Schaft 3.2 mit einem Gewinde und zweiten Werkzeugangriffsflächen am Schaftende 3.3. Das Gewinde kann als selbstschneidenes bzw. selbstfurchendes Gewinde ausgeführt sein. Mittels der ersten Werkzeugangriffsflächen wird die Befestigungsschraube vormontiert. Die Vormontierung der Befestigungsschrauben 3 bedeutet, daß diese mit einem Teil des Schaftes 3.2, also einigen Umdrehungen, in die Baugruppe 1 gedreht sind, jedoch nur so weit, daß noch ein Teil des Schaftes 3.2 freiliegt und der Kopf 3.1 der Befestigungsschraube 3 noch beabstandet von der Baugruppe 1 ist, damit dazwischen mit Toleranz noch der Träger 2 eingeführt werden kann. Mittels der zweiten Werkzeugangriffsflächen am Schaftende 3.3, die als Außen- oder Innensechskant oder wie in diesem Beispiel als Torx-Abschnitt ausgeführt sind, kann dann die Befestigungsschraube 3 von der Baugruppenseite her angezogen werden. Dabei erweist es sich als vorteilhaft, daß die Befestigungsschraube ein Linksgewinde aufweist,damit bei der entgültigen Montage die zweiten Werkzeugangriffsflächen am Schaftende 3.3 dann im vormontierten Zustand (vgl. Fig. 1) mit üblichen Schraubern angezogen werden können,die üblicherweise rechtsdrehend sind. Selbstverständlich sind auch rechtsdrehende Befestigungsschrauben und mit nur einseitiger Werkzeugangriffsfläche grundsätzlich geeignet.

Von den Befestigungsschrauben 3 ist wenigstens eine, in diesem Fall exakt eine, mittels einer Sicherungskappe 4 abgedeckt. In Figur 1 kann man bereits erkennen, daß in diesem Ausführungsbeispiel die Sicherungskappe 4 auf die Befestigungsschraube 3 lösbar aufgesteckt ist und diese zumindest teilweise verdeckt. Bei der bevorzugten Ausgestaltung mit Werkzeugangriffsflächen am Kopf 3.1 und Schaftende 3.3 ist die Sicherungskappe 4 entsprechend beidseitig mit Abdeckmitteln 4.1 und 4.4 versehen.

Figur 2 zeigt nun eine Draufsicht auf die Baugruppe 1 mit dne vormontierten Befestigungsschrauben 3 und der Sicherungskappe 4 sowie insbesondere auch die Öffnungen 5 im Träger 2. Die Öffnungen 5 weisen einen ersten Abschnitt 5.1 auf, in den der Kopf 3.1 der Befestigungsschraube 3 eingeführt werden kann. Die Öffnung verjüngt sich hin zu einem kleineren Abschnitt 5.2, der so groß ist, daß zwar der Schaft 3.2 der Befestigungsschrauben eingeführt, der Kopf 3.1 dann aber nicht mehr senkrecht zum Träger 2 herausgezogen und die Befestigungsschraube 3 festgezogen werden kann. Der Kopf 3.1 hintergreift dabei den Träger 2. In diesem Ausführungsbeispiel sind zwei Befestigungsschrauben 3 und daher auch zwei Öffnungen 5 vorgesehen sowie zusätzlich eine Führungsöffnung 6, in die beim Einführen der Befestigungsschrauben 3 in den Träger 2 ein Führungsstift 7 an der Unterseite der Baugruppe 1 (vgl. Fig. 1) eingeführt wird. Die Führungsöffnung 6 gibt die Bewegungsrichtung der Baugruppe 1 bzw. des Trägers 2 vor, entsprechend der auch die kleineren Abschnitte 5.2 der Öffnungen 5 zu den ersten Abschnitten 5.1 ausgerichtet sind. Diejenige Öffnung 5, in die die mit der Sicherungskappe 4 abgedeckt Befestigungsschraube 3 eingeführt wird, ist entsprechend der Außenmaße der Sicherungskappe 4 im ersten Abschnitt geringfügig größer ausgeführt.

Figur 4 verdeutlicht nun, wie die Schafte 3.2 der Befestigungsschrauben 3 in die kleineren Abschnitte 5.2 eingeführt werden und dabei der gestrichelt angedeutete Kopf 3.1 dieser mit dem Träger 2 durch weiteres Anziehen der Befestigungsschrauben 3 großflächig in Berührung tritt. Beim Einführen der Befestigungschrauben vom ersten Abschnitt 5.1 in den kleineren Abschnitt 5.2 wirken die Ränder der Öffnung 5 gleichzeitig als Anschlag für die Sicherungskappe 4, indem diese über ihren ersten Anschlag 4.3 beim Einführen gegen den Gegenanschlag am Träger eine Gegenkraft erfährt und die Sicherungskappe 4 von ihrer Preßpassung auf der Befestigungsschraube 3 gelöst wird.

Die Angriffsflächen des Kopfes 3.1 der Befestigungsschraube 3 werden vorzugsweise erst dann freigegeben, wenn der Schaft 3.2 bis zum Ende des kleineren Abschnitts 5.2 eingeführt wurde, wie dies in Fig. 4 skizziert ist. Von der Montageseite, von der aus die Baugruppe 1 in den Träger 2 eingeführt wurde, ist für den Monteur am Band mit bloßem Auge kaum erkennbar, ob der Kopf 3.1 der Befestigungsschraube 3 den Träger großflächig hintergreift. Dank der Sicherungskappe 4 kann ein verdeckt zugeführtes Werkzeug erst dann die Werkzeugangriffsflächen des Kopfes 3.1 erreichen, wenn die Sicherungskappe 4 mittels des Anschlags gelöst wurde. Die zweiten Abdeckmittel 4.4 sichern entsprechend die Werkzeugangriffsflächen am Schaftende 3.3.

Die Figuren 5 und 6 dienen der eingehenden Darstellung der Sicherungskappe 4 für dieses Ausführungsbeispiel, deren Ausformung jedoch für den Einzelfall angepaßt werden kann. Wesentlich ist für die Durchführung des Verfahrens eine Abdeckung 4.1, hier in Form eines einseitig geschlossenen Hohlzylinders mit einer Aussparung 4.2 zum Ein- und Ausführen des Kopfes 3.1 der Befestigungsschraube 3. Die Ausformung des Anschlagkörpers 4.3 weist eine ähnliche hohlzylindrische Form mit einer Aussparung und zusätzlich noch am Schaftende eine Halterung 4.4 auf, durch die die Sicherungskappe 4 beidseitig an der Befestigungsschraube bzw. der damit verbundenen Baugruppe 1 gehalten wird. Die Ausformung des Anschlagkörpers 4.3 kann aufgrund der geringen Dicke des Trägers 2 weitgehend frei entsprechend der Baugruppe 1 geformt werden. Durch den seitlichen Einschnitt des Befestigungskörpers 4.3, der exakt auf der Höhe des Trägers 2 liegt, wird sichergestellt, daß die Sicherungskappe 4 erst dann aufgrund ihrer entsprechend größeren Außenabmaße an dem kleineren Abschnitt 5.2 abgestreift wird, wenn die Befestigungsschraube 3 sehr weit, möglichst an das Ende des kleineren Abschnitts 5.2 eingeführt ist. Dieses zusammenspiel des kleineren Abschnitts 5.2 mit dem Anschlagkörper 4.3 wird in dem Schnitt in der Figur 6a noch besser erkennbar.

Figur 7 verdeutlicht die großflächige Berührung zwischen Kopf 3.1 und Träger 2, wenn der Schaft 3.2 bis zum Ende des kelineren Abschnitts eingeführt wurde und erst dann die Sicherungskappe 4 die Befestigungsschraube 3 zum weiteren Anziehen freigibt.

## Patentansprüche

1. Verfahren zur Befestigung einer Baugruppe (1) mit mindestens einer an dieser Baugruppe vormontierten Befestigungsschraube (3) an einem Träger (2) mit einer zugeordneten Öffnung (5),
wobei die Befestigungsschraube (3) einen Kopf (3.1) und einen Schaft (3.2) sowie Werkzeugangriffsflächen aufweist und die Befestigungsschraube nur mit einem Teil des Schaftes (3.2) an der zu befestigenden Baugruppe (1) vormontiert ist,
wobei die Öffnung (5) am Träger (2) einen ersten Abschnitt (5.1) aufweist, in den der Kopf (3.1) und der Schaft (3.2) der Befestigungsschraube (3) hindurchgeführt werden, und
ein zweiter, kleinerer Abschnitt (5.2) vorgesehen ist, der mit dem ersten Abschnitt (5.1) verbunden ist, so daß die Befestigungsschraube (3) mit dem Schaft (3.2) in diesen kleineren Abschnitt (5.2) eingeführt wird und mit dem Kopf (3.1) an diesem kleineren Abschnitt (5.2) festgeschraubt wird, **dadurch gekennzeichnet, daß**
die vormontierte Befestigungsschraube (3) zumindest an den Werkzeugangriffsflächen mittels einer Sicherungskappe (4) zunächst abgedeckt wird,
die Befestigungsschraube (3) mitsamt der Sicherungskappe (4) in den ersten Abschnitt (5.1) des Trägers (2) eingeführt wird und
die Sicherungskappe (4) die Werkzeugangriffsflächen erst dann freigibt, wenn der Schaft (3.2) in den kleineren Abschnitt (5.2) eingeführt wird.

2. Verfahren nach Anspruch 1, **dadurch gekennzeichnet, daß** die Sicherungskappe (4) die Werkzeugangriffsflächen erst dann freigibt, wenn der Schaft (3.2) bis zum Ende des kleineren Abschnitts (5.2) eingeführt wird.

3. Sicherungskappe (4) zur Durchführung eines Verfahrens nach einem der vorangehenden Ansprüche, bestehend aus:
- die Werkzeugangriffsflächen der Befestigungsschraube (3) abdeckenden Abdeckung (4.1,4.4), die an der Befestigungsschraube (3) lösbar angeordnet ist und mit ihren Außenabmaßen durch den ersten Abschnitt (5.1) der Öffnung im Träger (2) einführbar ist, sowie
- einem mit der Abdeckung (4.1) in Richtung des Schaftes verbundenen körper mit einem ersten Anschlag (4.3), der kleiner als der erste Abschnitt (5.1), jedoch größer als der zweite Abschnitt (5.2) der Öffnung ist, derart daß
- beim Bewegen der Befestigungsschraube (3) mit der Sicherungskappe (4) vom ersten zum zweiten Abschnitt (5.1->5.2) des Trägers (2) der Rand des Trägers (2) als Gegenanschlag für den ersten Anschlag (4.3) wirkt und zum Abstreifen der Sicherungskappe (4) führt.

4. Sicherungskappe nach Anspruch 3, **dadurch gekennzeichnet, daß** die Abdeckung (4.1) eine hohlzylindrische Form aufweist, bei der der Zylindermantel eine Aussparung (4.2) zum Anordnen und Lösen der Sicherungskappe von der Befestigungsschraube aufweist, und bei der eine Kreisfläche zum Schaft hin offen und die entgegengesetzte die Angriffsflächen des Kopfes abdeckend zumindest teilweise geschlossen ist.

5. Sicherungskappe nach Anspruch 4, **dadurch gekennzeichnet, daß** die Abdeckung in ihren Innenmaßen und/oder die Aussparung eine Preßpassung mit der Befestigungsschraube bilden, die überwunden wird unter Kraftwirkung beim Bewegen der Befestigungsschraube mit der Sicherungskappe vom ersten zum zweiten Abschnitt des Trägers beim Anschlag des Anschlagkörpers an den Rand der Öffnung.

6. Sicherungskappe nach einem der Ansprüche 3 bis 5, **dadurch gekennzeichnet, daß** der Körper eine den Schaft der Befestigungsschreibe annähernd halbseitig umschließende hohlzylindrische Form mit einer Öffnung zum Lösen der Sicherungskappe von der Befestigungsschraube aufweist, wobei die Außenabmaße des Anschlags kleiner als der erste, jedoch größer als der zweite Abschnitt der Öffnung am Träger sind.

## Claims

1. A method for fastening an assembly (1) to a support member (2) having an associated opening (5), said assembly incorporating at least one fastening screw (3) which is pre-mounted on this assembly,
wherein the fastening screw (3) comprises a head (3.1) and a shaft (3.2) and also tool-engagement surfaces, and the fastening screw is pre-mounted on the assembly (1) that is to be fastened over just a part of the shaft (3.2) thereof,
wherein the opening (5) on the support member (2) comprises a first section (5.1) through which the head (3.1) and the shaft (3.2) of the fastening screw (3) are inserted, and
there is provided a second, smaller section (5.2) which is connected to the first section (5.1) so that the shaft (3.2) of the fastening screw (3) is fed into this smaller section (5.2) and is tightened to this smaller section (5.2) by means of the head (3.1), **characterised in that**
at least the tool-engagement surfaces of the pre-mounted fastening screw (3) are initially covered by means of a protective cap (4),
the fastening screw (3) together with the protective cap (4) is inserted into the first section (5.1) of the support member (2) and
the protective cap (4) only exposes the tool-engagement surfaces when the shaft (3.2) is inserted into the smaller section (5.2).

2. A method in accordance with Claim 1, **characterised in that** the protective cap (4) only exposes the tool-engagement surfaces when the shaft (3.2) is inserted up to the end of the smaller section (5.2).

3. A protective cap (4) for carrying out a method in accordance with any of the preceding Claims consisting of:
- covering means (4.1, 4.4) which covers the tool-engagement surfaces of the fastening screw (3) and is arranged on the fastening screw (3) in releasable manner and which, by virtue of its outer dimensions, is adapted to be inserted through the first section (5.1) of the opening in the support member (2), and also
- a body which is connected to the covering means (4.1) in the direction of the shaft and incorporates a first stop (4.3) which is smaller than the first section (5.1) although larger than the second section (5.2) of the opening in such a manner that
- during the movement of the fastening screw (3) together with the protective cap (4) from the first to the second section (5.1 -> 5.2) of the support member (2), the edge of the support member (2) is effective as a counter-stop for the first stop (4.3) and leads to the stripping-off of the protective cap (4).

4. A protective cap in accordance with Claim 3, **characterised in that** the covering means (4.1) has a hollow cylindrical shape wherein the cylinder casing comprises a recess (4.2) for the arrangement and release of the protective cap from the fastening screw, and wherein one circular surface is open towards the shaft and the opposed surface covering the engagement surfaces on the head is at least partially closed.

5. A protective cap in accordance with Claim 4, **characterised in that** the inner dimensions of the covering means and/or the recess form a press-fit with the fastening screw, this being overcome by the effects of force during the movement of the fastening screw together with the protective cap from the first to the second section of the support member by virtue of the stop body striking the edge of the opening.

6. A protective cap in accordance with any of the Claims 3 to 5, **characterised in that** the body has the shape of a hollow cylinder which surrounds approximately half of the shaft of the fastening screw and comprises an opening for releasing the protective cap from the fastening screw, whereby the outer dimensions of the stop are smaller than the first, but larger than the second section of the opening on the support member.

## Revendications

1. Procédé de fixation d'un groupe structurel (1) avec au moins une vis de fixation (3), pré-montée sur ce groupe structurel, sur un support (2) présentant une ouverture associée (5),
dans lequel la vis de fixation (3) comprend une tête (3.1) et une tige (3.2) ainsi que des surfaces d'attaque d'outil, et la vis de fixation est pré-montée seulement par une partie de la tige (3.2) sur le groupe structurel (1) à fixer,
l'ouverture (5) dans le support (2) comprend un premier tronçon (5.1) dans lequel on fait passer la tête (3.1) et la tige (3.2) de la vis de fixation (3), et
dans laquelle est prévu un deuxième tronçon (5.2) plus petit qui est relié au premier tronçon (5.1), de sorte que l'on introduit la vis de fixation (3) avec la tige (3.2) dans ce petit tronçon (5.2) et on la visse par la tête (3.1) sur ce petit tronçon (5.2), **caractérisé en ce que**
tout d'abord on recouvre la vis de fixation (3) pré-montée au moins sur les surfaces d'attaque d'outil au moyen d'un capuchon de protection (4), on introduit la vis de fixation (3) conjointement avec le capuchon de protection (4) dans le premier tronçon (5.1) du support (2), et
le capuchon de protection (4) libère les surfaces d'attaque d'outil uniquement lorsque l'on introduit la tige (3.2) dans le petit tronçon (5.2).

2. Procédé selon la revendication 1, **caractérisé en ce que** le capuchon de protection (4) libère les surfaces d'attaque d'outil uniquement lorsque l'on introduit la tige (3.2) jusqu'à l'extrémité du petit tronçon (5.2).

3. Capuchon de protection (4) pour mettre en oeuvre le procédé selon l'une des revendications précédentes, constitué par
- un recouvrement (4.1, 4.4) qui recouvre les surfaces d'attaque d'outil de la vis de fixation (3) et qui est agencé de façon détachable sur la vis de fixation (3) et qui est susceptible d'être introduit par ses dimensions extérieures à travers le premier tronçon (5.1) de l'ouverture dans le support (2), ainsi que par
- un corps relié au recouvrement (4.1) en direction de la tige et comprenant une première butée (4.3) qui est plus petite que le premier tronçon (5.1), mais plus grande que le deuxième tronçon (5.2) de l'ouverture, de telle sorte que
lors du mouvement de la vis de fixation (3) avec le capuchon de protection (4) depuis le premier tronçon (5.1) vers le deuxième tronçon (5.2) du support (2), le bord du support (2) fait office de contre-butée pour la première butée (4.3) et mène à l'enlèvement du capuchon de protection (4).

4. Capuchon de protection selon la revendication 3, **caractérisé en ce que** le recouvrement (4.1) présente une forme cylindrique creuse dans laquelle l'enveloppe cylindrique présente une échancrure (4.2) pour agencer le capuchon de protection sur la vis de fixation et pour l'en détacher, et dans laquelle une surface circulaire est ouverte vers la tige et refermée au moins partiellement dans la direction opposée en recouvrant les surfaces d'attaque de la tête.

5. Capuchon de protection selon la revendication 4, **caractérisé en ce que** le recouvrement forme de par ses dimensions intérieures et/ou l'échancrure forme un ajustement à la presse avec la vis de fixation, qui est surmonté sous l'effet d'une force lors du mouvement de la vis de fixation conjointement avec le capuchon de protection depuis le premier tronçon vers le deuxième tronçon du support lors de la venue en butée du corps de butée contre le bord de l'ouverture.

6. Capuchon de protection selon l'une des revendications 3 à 5, **caractérisé en ce que** le corps présente une forme cylindrique creuse entourant approximativement sur une moitié la tige de la vis de fixation et présentant une ouverture pour détacher le capuchon de protection depuis la vis de fixation, les dimensions extérieures de la butée étant inférieures à celles du premier tronçon, mais supérieures à celles du deuxième tronçon de l'ouverture dans le support.
